# DEMANDE DE BREVET EUROPEEN

(11) **EP 1 559 881 A1**
(43) Date de publication de la demande: **03.08.2005**
(21) Numéro de dépôt: 04405067.2
(22) Date de dépôt: 02.02.2004
(51) Int. Cl.: F01N 3/26, F01N 3/24, F01N 3/021

(54) **Dispositif de destruction thermique des polluants gazeux et particulaires**

(71) Demandeur: Browston Trading S.A., 1205 Geneve (CH)
(72) Inventeur: Roux, Claude, 93290 Tremblay (FR)
(74) Mandataire: Savatier, Yves

(57) **Abrégé**

La présente invention concerne un dispositif de destruction thermique des polluants gazeux et particulaires des effluents exhalés par les moteurs à combustion interne de type essence ou diesel ou par les autres types de combustion notamment industriels ou ménagers, caractérisé en ce qu'il comprend au moins deux cartouches (1) agencées pour provoquer le contact des effluents avec une surface maximale d'échange d'un moyen thermique, chaque cartouche étant constituée d'une lamelle creuse réalisée en roche isolante thermorésistante qui dispose d'orifices (2) dans lesquels un fil métallique (3) tisse une grille créant une résistance chauffante, chacune des deux extrémités de chaque cartouche étant connectée à un lien conducteur de courant relié à un pôle d'une source de courant, le moyen thermique étant constitué de l'ensemble des grilles des cartouches (1) résistances chauffantes

## Description

La présente invention concerne un dispositif de destruction thermique des polluants gazeux et particulaires des effluents exhalés par les moteurs à combustion interne de type essence ou diesel ou par les autres types de combustion notamment industriels ou ménagers.

On sait, qu'en théorie la combustion est complète et un moteur à combustion interne rejette du dioxyde de carbone CO2, de l'eau H2O, et de l'azote N2, mais qu'en réalité cette combustion complète ne peut avoir lieu. La présence des très fortes contraintes de température et de pression, d'additifs dans les carburants, d'anomalies d'homogénéité, de richesse, de vaporisation, entre autres, entraînent des recombinaisons chimiques diverses, et l'émanation de divers polluants gazeux comme le monoxyde de carbone CO, des hydrocarbures non brûlés HC, de l'oxyde d'azote NOx, du dioxyde de souffre SO2, et de polluants particulaires tels que les suies et de particules de carbone.

Ils existent de nos jours des systèmes de catalyseurs destinés à traiter certains de ces polluants, principalement étudiés pour les oxyder. Installés sur les échappements des nouvelles voitures à partir du milieu des années 1970 aux Etats Unis et de la fin des années 1980 en Europe, les pots catalytiques ont permis de réduire les émissions de composés tels que le monoxyde de carbone CO, les oxydes d'azote NOx et les hydrocarbures non brûlés HC.

La technologie utilisée consiste à " capter " les polluants en sortie de pot d'échappement ou plus exactement à les " convertir " par un rajout d'air, en composés tels que le dioxyde de carbone, l'azote ou l'eau. Ceci est réalisé à l'aide de catalyseurs associant dans des proportions variables le platine, le rhodium et le palladium. Les pots catalytiques ont fortement contribué à l'élimination des additifs au plomb dans l'essence, l'essence plombée étant incompatible avec les pots d'échappement catalytiques. Mais de nombreux articles scientifiques publiés notamment par des chercheurs allemands ces dernières années montrent que ces pots d'échappement relâchent dans l'environnement des quantités sans cesse croissantes au cours de leur fonctionnement de platine, de rhodium ou de palladium, métaux utilisés dans des combinaisons variables comme composants principaux des catalyseurs utilisés. On a par exemple retrouvé ces métaux dans l'herbe des prés bordant des routes ou dans l'urine des habitants. Une étude a même montré que le platine était présent à des concentrations plus élevées dans la poussière des routes que dans le minerai de platine des mines de platine. Les pots d'échappement catalytique polluent donc à leur tour. De plus ils ont une durée de vie limitée, nécessitent une intervention périodique d'entretien, et sont inefficaces dans certaines conditions, notamment au démarrage du moteur, puisqu'ils ne fonctionnent correctement qu'une fois atteint une température optimale.

Les dispositifs catalytiques ne permettent pas la destruction totale des polluants gazeux mais seulement une réduction partielle de ceux-ci par une transformation chimique, et ne provoquent pas la destruction des polluants particulaires, les suies et particules de carbone, qui à cause de leur faible masse volumique et leur petite dimension ont tendance à se comporter comme des gaz. Seul leur piégeage par filtration puis la régénération du filtre est susceptible d'abaisser efficacement les émissions de polluants particulaires. Donc, théoriquement le seul moyen d'éliminer en même temps les suies, les particules et les émanations nocives, est d'agir en deux temps :
- premièrement, filtration et rétention,
- puis inflammation et combustion.
Mais le début d'oxydation étant de l'ordre 400°C, ces températures sont que très rarement rencontrées dans les échappements des véhicules, et la régénération du filtre ne peut donc se réaliser qu'en abaissant la température de combustion ou en accroissant la température du filtre ou des gaz. Les systèmes catalytiques d'oxydation déjà existants doivent donc être combinés à des systèmes de filtres à particules, pour arriver à des résultats acceptables, correspondant aux normes de plus en plus rigoureuses.

Ces normes, imposées principalement au fabricants des moteurs et automobiles, ne concernent que les moteurs de nouvelle génération, mais ceux de l'ancienne génération, beaucoup plus polluants, ont une normalisation plus permissive étant donné que les systèmes catalytiques existants ne peuvent pas être utilisés par ceux-ci.

On connaît par ailleurs différents systèmes de destruction des gaz polluants par pyrolyse. Par exemple le document WO9214042 décrit un procédé pour éliminer les polluants des émissions de moteurs diesel, qui consiste à faire passer les effluents dans une chambre isolée thermiquement à travers des matériaux réfractaires formés d'alliages inoxydables. Le document FR-A-2702004 divulgue un dispositif de pyrolyse de la calamine des gaz de combustion de moteurs à combustion interne, qui comporte comme moyen de pyrolyse une résistance chauffante en spirale. Ce document mentionne que lors de la destruction thermique par pyrolyse les résidus ne sont que partiellement oxydés. Le document WO9004707 décrit un dispositif de combustion complète des polluants gazeux et solides dans les effluents de systèmes de combustion, qui comprend un four à pyrolyse porté à une température d'au moins 1300 °C.

Le document WO0043094 décrit un dispositif de neutralisation de gaz polluants par pyrolyse constitué d'un four à pyrolyse agencé pour retenir et détruire les résidus de combustion incomplète par l'intermédiaire de moyens présentant une grande surface d'échange à température de pyrolyse avec les effluents. Ces moyens peuvent consister en un ensemble de sphères minérales portant des excroissances du type pointe de diamant, un empilage de plaques métalliques portant chacune sur toute leur surface une pluralité d'excroissances, une seule plaque métallique enroulée en spirale ou un ensemble de résistances électriques enroulées en spirale. Un dispositif comportant de tels moyens peut servir à réaliser un prototype expérimental intéressant mais il est fragile, peu économique et difficile à produire à grande échelle.

Les dispositifs catalytiques ou pyrolytiques connus ne répondent donc pas de manière satisfaisante au besoin d'éliminer les polluants gazeux et particulaires dans les effluents de combustion, en particulier des véhicules automobiles ; notamment ils sont complexes et coûteux.

Le problème à résoudre, l'objectif de la présente invention est d'apporter un dispositif de destruction des polluants gazeux et particulaires dans les effluents exhalés par les moteurs à combustion interne de type essence ou diesel ou par les autres types de combustion notamment industriels ou ménagers, qui soit:
- unique et efficace, à vocation universelle, qui "termine le processus de combustion" des moteurs essence et diesel, d'ancienne ou de nouvelle génération, pour détruire complètement les polluants gazeux et particulaires ou réduire leur quantité à un niveau inférieur à celui déjà obtenu par les systèmes connus, mais sans créer une nouvelle forme de pollution.
- réalisable avec des matériaux entièrement recyclables, à un coût égal ou de préférence inférieur aux dispositifs déjà existants.
- doté des propriétés suivantes: grande efficacité de destruction des polluants gazeux et particulaires, faible perte de charge, faible augmentation de consommation d'énergie, faible perte de performances, pas d'augmentation des émissions durant la régénération et le fonctionnement, absence de nouvelles émissions, absence de pollution sonore importante, résistance aux températures élevées, grande fiabilité, longue durée de vie, sécurité lors d'accidents ou de problème moteur, faible encombrement et installation simple.

Ce problème est résolu par l'invention telle que définie par les revendications ci-jointes.

L'invention propose un dispositif unique robuste, à vocation universelle, de faible consommation d'énergie, à faible perte de charge, qui est efficace dès sa mise sous tension pour la destruction polluants gazeux et particulaires des moteurs à combustion interne de type essence ou diesel, fixes ou mobiles, de nouvelle ou d'ancienne génération, couvrant toutes les plages de puissance existant sur le marché. Pour les moteurs de type essence ou diesel d'ancienne génération, le dispositif de l'invention permet l'élimination de plus de 95 % des polluants gazeux et de plus de 95 % des polluants particulaires. Pour les moteurs de type essence ou diesel de nouvelle génération, le replacement du pot catalytique par le dispositif de l'invention permet d'obtenir le même taux d'élimination des polluants gazeux et particulaires qu'avec le pot catalytique mais sans la pollution due au relâchement dans l'environnement de platine, de rhodium ou de palladium. De plus, le dispositif de l'invention est beaucoup moins coûteux à fabriquer qu'un pot catalytique car, contrairement à ce dernier, il n'utilise aucun métal rare.

Ce dispositif est également utilisable pour la destruction des polluants gazeux et particulaires d'effluents de combustion d'origine industrielle ou ménagère.

Il peut, le cas échéant, être combiné à d'autres systèmes déjà existants.

L'invention concerne un dispositif de destruction thermique des polluants gazeux et particulaires des effluents exhalés par les moteurs à combustion interne de type essence ou diesel ou par les autres types de combustion notamment industriels ou ménagers, caractérisé en ce qu'il comprend au moins deux cartouches agencées pour provoquer le contact des effluents avec une surface maximale d'échange d'un moyen thermique, chaque cartouche étant constituée d'une lamelle creuse réalisée en roche isolante thermorésistante qui dispose d'orifices dans lesquels un fil métallique tisse une grille créant une résistance chauffante, chacune des deux extrémités du fil métallique de chaque cartouche étant connectée à un lien conducteur de courant relié à un pôle d'une source de courant, le moyen thermique étant constitué de l'ensemble des grilles des cartouches résistances chauffantes.

Le diamètre, la longueur, la nature du fil métallique qui tisse chacune des grilles des cartouches résistances chauffantes, et la source de courant (ou d'énergie), en particulier sa tension, sont choisis de façon à porter chacune des grilles des cartouches résistances chauffantes à une température suffisante pour provoquer la destruction thermique des polluants gazeux et particulaires.

Chacune des grilles des cartouches résistances chauffantes étant connectée par des liens conducteurs de courant reliés aux deux pôles d'une source de courant, celles-ci peuvent fonctionner indépendamment les unes des autres.

La lamelle creuse de chacune des cartouches peut être par exemple de forme circulaire, ovale, carrée, rectangulaire, hexagonale ou polygonale.

La roche isolante thermorésistante de cette lamelle creuse est une matière ne conduisant pas l'électricité, choisie pour résister aux températures susceptibles d'être rencontrées par les effluents de combustion et de la résistance chauffante lors du fonctionnement du dispositif. Ces températures sont en général de 400 à 800°C. Cette roche doit avoir une souplesse suffisante pour résister aux contraintes mécaniques susceptibles d'être rencontrées lors de l'utilisation du dispositif, par exemple les vibrations d'un véhicule automobile. Une roche isolante thermorésistant appréciée est par exemple, le mica non-conducteur d'origine naturelle ou synthétique, matériau susceptible d'être facilement coupé en tranches fines flexibles et élastiques, ou en matériau de structure semblable.

Le fil métallique des grilles de chaque cartouche est constitué d'un ou plusieurs métaux ou alliages qui possèdent une excellente conductivité électrique et thermique leur permettant d'atteindre rapidement une température suffisante pour la destruction thermique des polluants gazeux et particulaires, et ne sont pas dégradés par les effluents de combustion dans les conditions d'utilisation. Des alliages intéressants sont par exemple les alliages Nickel-Chrome, en particulier les alliages comportant en masse de 90 à 70 % de nickel et 10 à 30 % de chrome.

Le nombre de cartouches est au minimum de 2, en général d'au moins 4, souvent d'au moins 8. Ce nombre est choisi notamment en fonction des quantités des polluants gazeux et particulaires à traiter.

Le nombre de cartouches, le nombre des orifices de chaque lamelle servant à tisser la grille métallique chauffante, et l'orientation des cartouches sont choisis de façon à provoquer le contact des effluents avec une surface maximale d'échange du moyen thermique, c'est-à-dire avec la surface la plus grande du moyen thermique compatible avec le taux de destruction des polluants gazeux et particulaires souhaité et la perte de charge acceptable, compte tenu notamment du dispositif de combustion.

En général l'orientation des lamelles est telle que les grilles des lamelles de deux cartouches adjacentes ne soient pas parallèles, l'ensemble des grilles constituant un réseau complexe, propre à perturber le passage des effluents de combustion en cassant les flux et provoquer leur contact avec une surface d'échange maximale du moyen thermique.

La source de courant est en général continue pour les véhicules automobiles et alternative pour les systèmes de combustion fixes, la tension et l'ampérage étant choisis en fonction des besoins.

Selon un mode de réalisation préféré, les cartouches sont espacées et soutenues par les fentes de deux lignes hémicylindriques de support, un orifice étant aménagé à proximité de chaque fente comblé par un isolant, par exemple de type porcelaine ou mica, traversé par le fil métallique qui est connecté à un lien bon conducteur de courant, par exemple en laiton, relié à un pôle d'une source de courant. Ces lignes hémicylindriques sont en matériau rigide et thermorésistant, par exemple en un métal ou un alliage tel que l'acier inoxydable Inox.

Le dispositif selon l'invention comporte au moins une moyen de destruction thermique des polluants gazeux et particulaires agencé pour terminer la processus de combustion incomplète, par l'intermédiaire de moyens présentant une très grande surface incandescente, qui, en contact avec les résidus imbrûlés recommencent un second processus de combustion, dés la mise en marche du dispositif par l'énergie nécessaire à son fonctionnement.

Le dispositif de l'invention peut être réalisé, en matériaux recyclables.

Le dispositif de l'invention est de préférence agencé pour pouvoir être intégré dans un dispositif de pot d'échappement de véhicule automobile ou dans une cheminée à vocation industrielle, domestique ou autre.

D'autres particularités et avantages de la présente invention apparaîtront dans la description qui va suivre, qui sera faite à l'aide des desseins annexés qui illustrent, schématiquement et à titre d'exemple, deux formes d'exécution du dispositif de réaction thermique de cette invention.

La Figure 1 représente les éléments de base, qui composent le module élémentaire du dispositif de l'invention.

La Figure 2 représente le module élémentaire du dispositif de l'invention avec ses composants assemblés.

La Figure 3 représente le module élémentaire du dispositif de l'invention avec ses composants rassemblés, intégré dans un dispositif de pot d'échappement classique.

La Figure 4 représente les cartouches du dispositif de l'invention et un mode d'orientation avantageux de celles-ci.

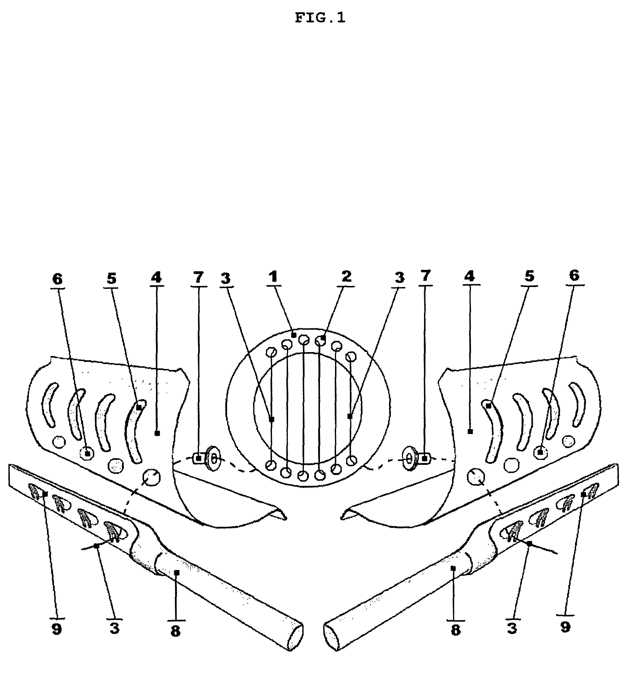

Sur la Figure 1 on distingue une cartouche (1) dont le bord dispose d'orifices supérieurs et inférieurs (2), entre lesquels un fil (3) tisse la grille de la cartouche (1) ; une ligne hémicylindrique (4), aménagée de 4 fentes (5), pour le soutien et l'espacement de 4 cartouches (1), et 4 orifices (6), dans chacun desquels on introduit un isolant (7), à travers lequel chaque extrémité du fil métallique (3) de chaque cartouche (1), sera connecté à un lien conducteur (8), par un moyen de contact (9), pour être relié à un pôle d'une source de courant.

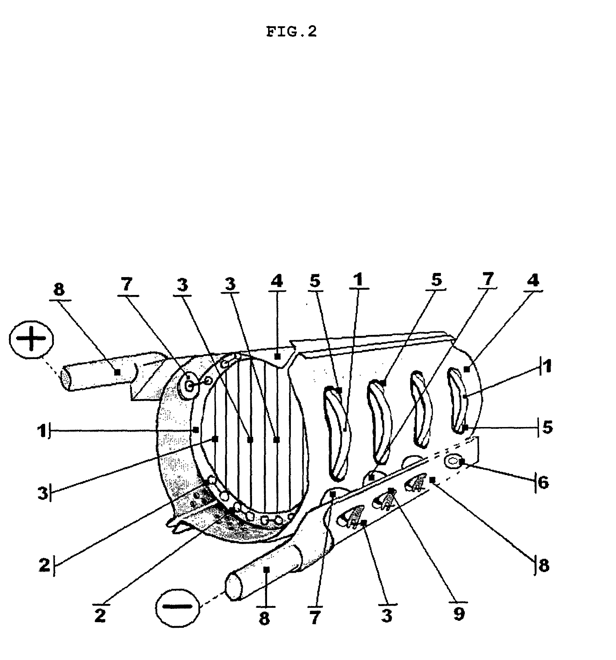

Sur la Figure 2 on distingue 4 cartouches (1) dont le bord de chacune dispose d'orifices inférieurs et supérieurs (2) entre lesquels un fil (3) tisse la grille de la cartouche (1). Les cartouches sont montées en série, espacées et soutenues à l'aide de deux lignes hémicylindriques (4), aménagées de quatre fentes (5) et d'orifices (6), afin d'introduire un isolant (7), à travers lequel une extrémité du fil (3) de chaque cartouche (1), est connecté à un lien conducteur (8), par un moyen de contact (9), pour être relié à un pôle d'une source de courant.

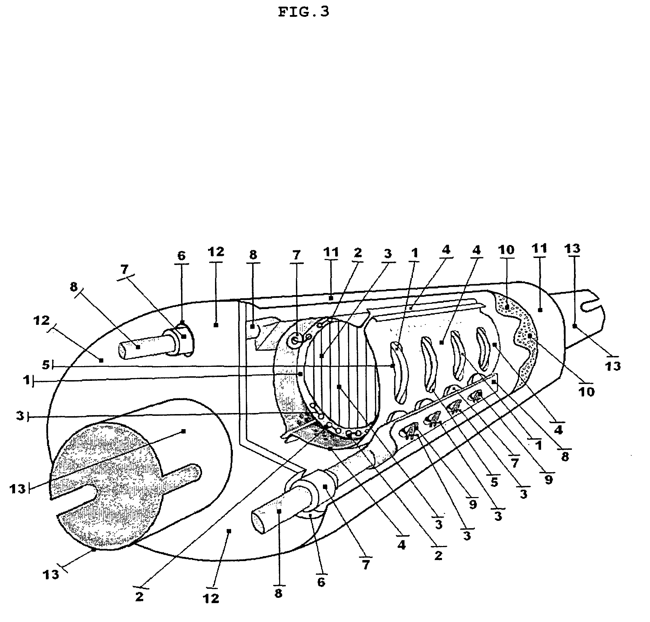

Dans la Figure 3 on distingue le module élémentaire du dispositif avec ses composants assemblés, dont au moins une cartouche (1) dont le bord dispose d'au moins une orifice (2), dans lequel on distingue au moins un fil (3), de façon à tisser la grille d'au moins une cartouche (1), montés en série, espacés et soutenus à l'aide d'au moins une ligne cylindrique (4), aménagées de 4 fentes (5) pour le soutien et l'espacement des 4 cartouches (1), et aménagées d'orifices (6), afin d'introduire un isolant (7), à travers lequel au moins une extrémité du fil métallique (3) de chaque cartouche (1), sera connecté à un lien électrique (8), par un moyen de contact (9), pour être relié à un pôle d'une source de courant, en passant par un isolant (7), qui se trouve dans un orifice (6), aménagées dans un des couvercles (12), de la ligne hémicylindrique du dispositif d'échappement (11), aménagé d' une bride de connexion (13), et d'un isolant (10), de type laine de roche ou autre, qui recouvre le module élémentaire du dispositif introduit dans la ligne cylindrique du dispositif d'échappement (11), pour combler la surface transversale d'écoulement des polluants gazeux et particulaires.

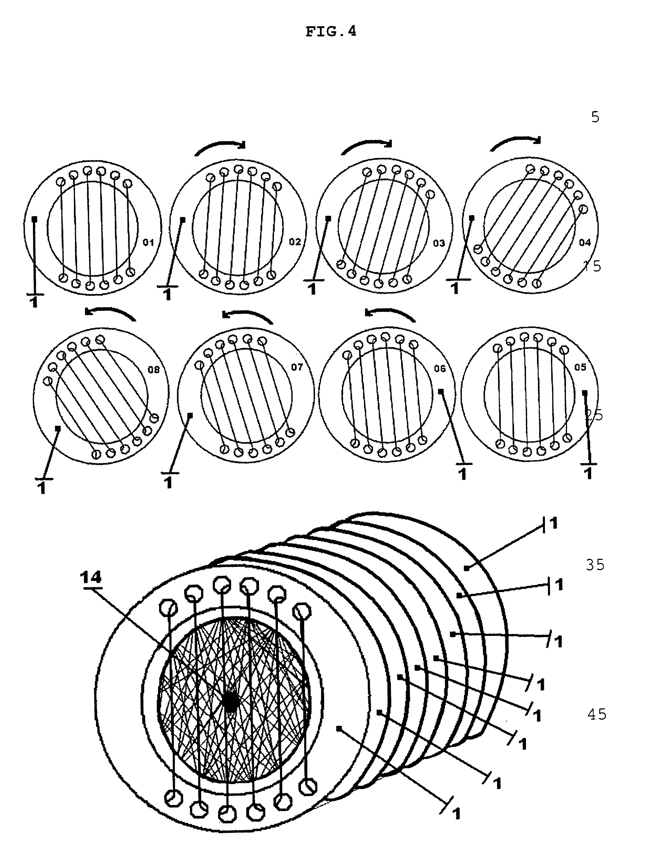

Dans la Figure 4 on représente les cartouches (1) du dispositif et leur orientation non parallèle dans le dispositif, pour obtenir au moins un réseau (14) très complexe.

Le dispositif de l'invention peut avoir plusieurs tailles, et peut être facilement réalisé par des moyens industriels, manufacture ou autres.

Le dispositif selon l'invention est particulièrement destiné à être incorporé dans la ligne d'échappement des moteurs à combustion interne, des cheminées, ou d'autres appareils de combustion , afin d'améliorer la destruction des émanations nocives, des suies et des particules, par une réaction thermique, en réalisant un second processus de combustion.

## Revendications

1. Dispositif de destruction thermique des polluants gazeux et particulaires des effluents exhalés par les moteurs à combustion interne de type essence ou diesel ou par les autres types de combustion notamment industriels ou ménagers, **caractérisé en ce qu'**il comprend au moins deux cartouches (1) agencées pour provoquer le contact des effluents avec une surface maximale d'échange d'un moyen thermique, chaque cartouche étant constituée d'une lamelle creuse réalisée en roche isolante thermorésistante qui dispose d'orifices (2) dans lesquels un fil métallique (3) tisse une grille créant une résistance chauffante, chacune des deux extrémités de chaque cartouche étant connectée à un lien conducteur de courant relié à un pôle d'une source de courant, le moyen thermique étant constitué de l'ensemble des grilles des cartouches (1) résistances chauffantes.

2. Dispositif selon la revendication 1 **caractérisé en ce qu'**il comprend au moins 4 cartouches (1), de préférence au moins 8 cartouches.

3. Dispositif selon l'une des revendications précédentes **caractérisé en ce que** l'orientation des lamelles est telle que les grilles des lamelles de deux cartouches (1) adjacentes ne sont pas parallèles.

4. Dispositif selon l'une des revendications précédentes **caractérisé en ce que** la roche isolante thermorésistante est du mica ou un matériau de structure semblable.

5. Dispositif selon l'une des revendications précédentes **caractérisé en ce que** le fil métallique (3) des grilles de chaque cartouche (1) est un alliage de nickel-chrome.

6. Dispositif selon l'une des revendications précédentes **caractérisé en ce que** les cartouches sont espacées et soutenues par les fentes (5) de deux lignes hémicylindriques (4), un orifice (6) étant aménagé à proximité de chaque fente comblé par un isolant (7), traversé par le fil métallique (3) qui est connecté par des moyens (9) à un lien conducteur (8) relié à un pôle d'une source de courant.

7. Dispositif selon l'une des revendications précédentes, agencé pour pouvoir être intégré dans un dispositif de pot d'échappement de véhicule automobile.

8. Dispositif selon l'une des revendications précédentes, agencé pour pouvoir être intégré dans une cheminée à vocation industrielle, domestique ou autre.
